(19) Europäisches Patentamt
European Patent Office
Office européen des brevets

(11) **EP 1 432 170 B1**

(12) **EUROPÄISCHE PATENTSCHRIFT**

(45) Veröffentlichungstag und Bekanntmachung des Hinweises auf die Patenterteilung:
**26.11.2014   Patentblatt 2014/48**

(51) Int Cl.:
*G06Q 50/06* *(2012.01)*          *H04L 9/32* *(2006.01)*

(21) Anmeldenummer: **03025254.8**

(22) Anmeldetag: **06.11.2003**

(54) **Verfahren und Anordnung zur unterschiedlichen Erzeugung kryptographischer Sicherungen von Mitteilungen in einem Hostgerät**

Method and apparatus for generating different cryptographic secure procedures concerning messages in a host device

Procédé et dispositif pour générer différentes procédures sécurisées cryptographiques concernant des messages dans un dispositif hôte

(84) Benannte Vertragsstaaten:
**AT BE BG CH CY CZ DE DK EE ES FI FR GB GR HU IE IT LI LU MC NL PT RO SE SI SK TR**

(30) Priorität: **16.12.2002   DE 10260406**

(43) Veröffentlichungstag der Anmeldung:
**23.06.2004   Patentblatt 2004/26**

(73) Patentinhaber: **Francotyp-Postalia GmbH
16547 Birkenwerder (DE)**

(72) Erfinder: **Bleumer, Gerrit, Dr.
16552 Schildow (DE)**

(56) Entgegenhaltungen:
**US-A- 5 742 684     US-A1- 2002 108 042**

**Beschreibung**

Die Erfindung betrifft ein Verfahren und eine Anordnung zur unterschiedlichen Erzeugung kryptographischer Sicherungen von Mitteilungen in einem Hostgerät, gemäß des Oberbegriffs des Anspruchs 1 und 5. Die Erfindung ist für Postverarbeitungsgeräte mit einem Sicherheitsmodul geeignet, welches eine entsprechende kryptographischen Sicherung unterschiedlich in Abhängigkeit vom einem im Postverarbeitungsgerät eingestellten Mitteilungstyp erzeugt. Sie kommt insbesondere in Frankiermaschinen, Adressiermaschinen und anderen Postverarbeitungsgeräten zum Einsatz.

Ein Frankierabdruck beinhaltet eine Mitteilung mit einer zuvor eingegebenen und gespeicherten postalische Information einschließlich der Postgebührendaten zur Beförderung des Briefes. Moderne Frankiermaschinen ermöglichen einen Abdruck einer speziellen Markierung zusätzlich zu der vorgenannten Mitteilung. Beispielsweise wird aus der vorgenannten Mitteilung ein Message Authentication Code erzeugt und dann ein Barcode als Markierung gebildet. Wenn ein Sicherheitsabdruck mit einer solchen Markierung gedruckt wird, ermöglicht das eine Nachprüfung der Echtheit des Sicherheitsabdruckes beispielsweise im Postamt (US 5.953.426).

Die Frankiermaschine JetMail® der Anmelderin ist mit einer Base und mit einem abnehmbaren Meter ausgestattet. Letzteres beinhaltet ein Sicherheitsmodul, das beispielsweise eine digitale Signatur für einen Sicherheitsabdruck der Frankiermaschine erzeugt (US 6.041.704).

Es ist außerdem bekannt, den Datenaustausch zwischen einer Frankiermaschine und einer entfernten Datenzentrale kryptographisch abzusichern, wenn ein Guthabenwert nachgeladen wird. Ein Sicherheitsmodul kann eine Hardware-Abrecheneinheit und eine Einheit zum Absichern des Druckens der Postgebührendaten aufweisen (EP 789 333 A2). Die Hardwareabrecheneinheit wurde mit einem Anwenderschaltkreis ASIC und die andere Einheit mit einem OTP-Prozessor (One Time Programmable) realisiert. Somit kann der Abrechenvorgang nicht durch eine Programmänderung manipuliert werden und außerdem kann ein beliebiger kryptografischer Algorithmus im Festwertspeicher für den OTP-Prozessor aufrufbar gespeichert werden. Ein interner OTP-Speicher speichert auslesesicher sensible Daten (u.a. kryptografische Schlüssel), die beispielsweise zum Nachladen eines Guthabens oder zum Erzeugen einer kryptographischen Sicherung einer Mitteilung der Frankiermaschine erforderlich sind. Somit kann ein bekannter Verschlüsselungsalgorithmus, beispielsweise Data Encryption Standard (DES) für die Bildung von MAC's für Mitteilungen von unterschiedlichen Typus eingesetzt werden, wobei für jeden Typus ein vorbestimmter kryptografischer Schlüssel vereinbart wird. Ein Sicherheitsgehäuse des Sicherheitsmoduls bietet einen äußeren Schutz vor Ausspähung der kryptografischen Schlüssel (DE 201 12 350 U1). Frankiermaschinen werden meist nur für einen einzigen Zweck entwickelt, nämlich postalische Freistempel zu drucken. Dabei kommt teuere Crypotechnologie zum Einsatz. Gelänge es, weitere Anwendungsmöglichkeiten zu erschließen, wobei die zugelassenen Signieralgorithmen verwendet werden, ohne dass eine Verwechselungsgefahr mit dem postalischen Freistempel besteht, würde das die Funktionalität des Gerätes erweitern.

Aus dem US 2002/108042 ist ein Zertifikat-Herausgabesystem bekannt, das mit unterschiedlichen Signaturen arbeitet, die in Zertifikaten für öffentliche Schlüssel verwendet werden.

Im Patent US 6058384 mit dem Titel: Method for Removing Funds from a Postal Security Device wurde bereits vorgeschlagen, eine Signatur für einen Nachladefreistempel (Refund Indicium) zu erzeugen, wobei ein ungültiger ZIP code verwendet wird, zum Beispiel 00000-0000. Dies soll verhindern, dass ein betrügerischer Benutzer die Signatur boshaft für einen gewöhnlichen Freistempel zum Postversand verwendet.

Ein anderer Weg, die zur Verarbeitung mit dem kryptografischen Algorithmus herangezogenen Daten abhängig vom Mitteilungstyp in einer speziellen Weise zusammenzustellen oder indem das Nachrichtenformat für einen Nachladefreistempel anders gewählt wird, als das Nachrichtenformat eines gewöhnlichen Freistempels, beispielsweise ganz ohne ZIP, etc., ist aufgrund der sehr unterschiedlichen Bestimmungen der nationalen Postbehörden oder privaten Postbeförderer nicht immer gangbar.

Der Erfindung liegt die Aufgabe zugrunde, ein Verfahren und eine Anordnung zur unterschiedlichen Erzeugung kryptographischer Sicherungen von Mitteilungen in einem Hostgerät zu entwickeln, wobei die unterschiedliche Erzeugung in Abhängigkeit von einem jeweils eingestellten Mitteilungstyp gesteuert wird.

Die Aufgabe wird mit den Merkmalen des Verfahrens nach dem Anspruch 1 und mit den Merkmalen der Anordnung nach dem Anspruch 5 gelöst.

Zur kryptographischen Sicherung einer Mitteilung wird eine Signatur eingesetzt, wobei sich die Signaturen in der Art ihrer Erzeugung unterscheiden, wenn Mitteilungen für verschiedene Zwecke benutzt werden. Die kryptographischen Algorithmen zur Erzeugung von Signaturen können separat oder gemeinsam in einer Logik hardwaregemäß oder programmgemäß im Festwertspeicher eines postalischen Sicherheitsgerätes PSD implementiert sein.

Ausgehend von der Überlegung, dass die Speicherung von unterschiedlichen Programmen im vorgenannten Festwertspeicher, wobei jedes Programm zur Ausführung eines bestimmten kryptographischen Algorithmusses dient, eine beliebige Kombination von Signieralgorithmen und Hash-algorithmen für einen Mitteilungstyp ermöglicht, wird eine Logik zusätzlich an ein postalischen Sicherheitsgerät angeschlossen. Die Logik führt allein oder in Verbindung mit Programmen im Festwertspeicher des postalischen Sicherheitsgerätes und gegebenenfalls zusätzlich mit Programmen im Festwertspeicher des Hostgerätes mindestens einen bestimmten Algorithmus aus der Vielzahl der kryptographischen Algorithmen aus, wobei die Ausführung in Abhängigkeit von einem jeweils eingestellten Mitteilungstyp gesteuert wird.

Die Cryptologik weist ausgangsseitig mindestens einen Ausgang auf, der direkt oder indirekt auf den Eingang einer zweiten Logikschaltung im Inneren des postalischen Sicherheitsgerätes geschaltet ist. Die Cryptoalgorithmen können außerhalb des PSD's in der Cryptologik und/oder innerhalb des PSD's implementiert sein. Durch Umschalter können die Ein- oder Ausgänge von Logikschaltungen oder Parameter von Hashfunktionen von einer Logikschaltung geschaltet werden, wobei die Logikschaltungen gleich und unterschiedlich aufgebaute Cryptoalgorithmen verwenden. Ein Umschalter kann im PSD und/oder außerhalb des PSD's implementiert sein und dabei vom PSD oder Host getriggert werden. Je weniger die Host application und je mehr die PSD application das Erzeugen einer Signatur bestimmen soll, um so geeigneter sind Varianten, in welchen der Umschalter im PSD realisiert ist. Soll im anderen Fall die Host application die Entscheidung treffen, um so geeigneter sind Varianten, in welchen der Umschalter außerhalb des PSD realisiert ist. Damit ergeben sich eine Vielzahl an Varianten der im Inneren der Cryptologik und des PSD's implementierten Struktur bzw. der betriebsmäßigen Zusammenschaltung beider, so dass Signaturen erzeugt werden können, die für das Frankieren von Post ungültig aber für andere Zwecke geeignet bzw. gültig sind. Weitere Anwendungsmöglichkeiten im Bereich der Postbearbeitung sind noch spezielle Freistempel wie zum Beispiel postage correction indicia, oder military mail oder embassy mail. Darueber hinaus gibt es nichtpostalische Anwendungen im Bereich Ticketing und wertbehafteter Belege, für die nun sinnvollerweise dieselben zugelassenen Signieralgorithmen verwenden werden, ohne eine Verwechselungsgefahr mit postalischen Freistempel. Das gestattet es weitere Anwendungsmöglichkeiten zu erschließen, was die Funktionalität beispielsweise von Frankiermaschinen erweitert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1, vereinfachte Darstellung der Generierung einer Signatur mittels eines bekannten postalischen Sicherheitsgerätes (priort art),

Figur 2, Host-gesteuerte Umschaltung der Cryptoalgorithmen für eine Generierung einer Signatur mittels des postalischen Sicherheitsgerätes (Variante 1),

Figur 3, 4, Darstellung der Strukturen eines Cryptoalgorithmus,

Figur 5a, zweite Variante einer host-gesteuerten Umschaltung der Cryptoalgorithmen für eine Generierung einer Signatur mittels des postalischen Sicherheitsgerätes,

Figur 5b, PSD-gesteuerte Umschaltung der Cryptoalgorithmen für eine Generierung einer Signatur mittels des postalischen Sicherheitsgerätes (Variante 1),

Figur 6, zweite Variante einer PSD-gesteuerten Umschaltung der Cryptoalgorithmen für eine Generierung einer Signatur mittels des postalischen Sicherheitsgerätes,

Figur 7, dritte Variante einer PSD-gesteuerten Umschaltung der Cryptoalgorithmen für eine Generierung einer Signatur mittels des postalischen Sicherheitsgerätes,

Figur 8, dritte Variante einer host-gesteuerten Umschaltung der Cryptoalgorithmen für eine Generierung einer Signatur mittels des postalischen Sicherheitsgerätes,

Figur 9, vierte Variante einer host-gesteuerten Umschaltung der Cryptoalgorithmen für eine Generierung einer Signatur mittels des postalischen Sicherheitsgerätes,

Figur 10, Host- und PSD-gesteuerte Umschaltung der Cryptoalgorithmen für eine Generierung einer Signatur mittels des postalischen Sicherheitsgerätes,

Figur 11, Blockschaltung eines Hostgerätes.

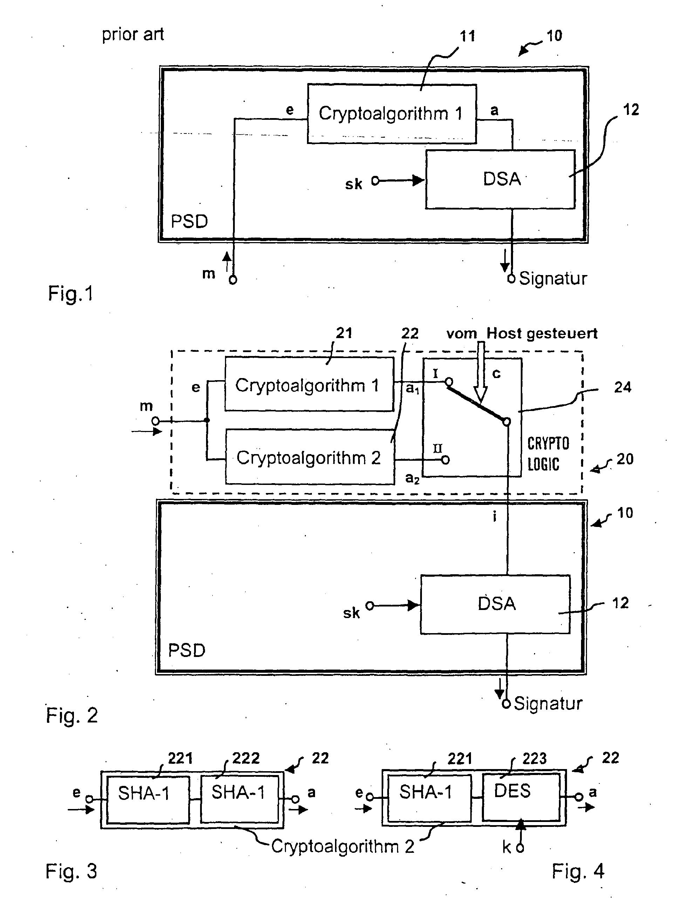

Die Figur 1 zeigt eine vereinfachte Darstellung der Generierung einer Signatur mittels eines bekannten postalischen Sicherheitsgerätes (PSD). Über einen Eingang e des PSD 10 liegt eine Mitteilung m an einer ersten Logikschaltung 11 an, die auf die Mitteilung m einen ersten Cryptoalgorithmus anwendet. Der Ausgang a der ersten Logikschaltung 11 liegt am Eingang einer zweiten Logikschaltung 12 an, die einen digitalen Signaturalgorithmus (DAS) auf das Ausgangssignal a anwendet, um Daten für eine Signatur zu erzeugen. Die Logikschaltungen können einen Softwareoder Hardwaremodul beinhalten, der den entsprechenden Algorithmus software- oder hardwaremäßig ausführt. Beispielsweise wird der aus dem US 5,231,668 bekannte Digital Signatur Algorithmus (DAS) oder ein vergleichbarer Standardalgorithmus softwaremäßig durch die zweite Logikschaltung ausgeführt. Ein entsprechendes durch einen Mikroprozessor (nicht gezeigt) abarbeitbares Programm ist im Festwertspeicher (nicht gezeigt) der zweiten Logikschaltung des Sicherheitsmoduls implementiert.

Der ersten Cryptolgorithmus wird nun im Unterschied zur bekannten Variante hardwaremäßig und extern des PSD 10 mittels der ersten Logikschaltung ausführt. In einer ersten Variante wird die ersten Logikschaltung zuschaltbar realisiert. Um Signaturen für unterschiedliche Zwecke zu generieren, wurde eine Anordnung geschaffen, die zwei verschiedene zugelassene Hashfunktionen bei demselben Signieralgorithmus benutzt.

Die Figur 2 zeigt eine host-gesteuerte Umschaltung der Cryptoalgorithmen für eine Generierung einer Signatur mittels des postalischen Sicherheitsgerätes. In dieser ersten Variante sind die Logikschaltung 21 für den Cryptoalgorithmus 1 und die Logikschaltung 22 für den Cryptoalgorithmus 2 eingangsseitig verbunden und führen ausgangsseitig jeweils auf Kontakte I und II eines Umschalters 24, wobei letzterer ausgangsseitig am Eingang der zweiten Logikschaltung 12 anliegt, die den DAS auf das Ausgangssignal anwendet, um Daten für eine Signatur zu erzeugen. Die beiden Logikschaltungen 21 und 22 und der Umschalter 24 bilden eine host-gesteuerte Cryptologik 20, welche einen Steuerdateneingang c aufweist und mit ihrem Ausgang d mit dem Informationseingang i des PSD 10 verbunden ist.

Die im IBI-Programm der amerikanischen Postbehörde USPS angegebenen nutzbaren Algorithmen sind RSA (Rivest, Shamir, Adleman), DAS (Digital Signature Algorithm), und ECDSA (Elliptic Curve Digital Signature Algorithm), welche jeweils mit dem SHA-1 (Secure Hash Algorithm) beschränkt werden.

Unter der Voraussetzung, dass ein Signierschlüssel sk eines postalischen Sicherheitsgerätes (PSD) auf eine Mitteilung m für einen ersten Zweck, beispielsweise zur Berechnung eines gewöhnlichen Freistempels (49 byte) angewendet wird, um die Signatur für die Mitteilung m wie folgt zu berechnen, ergibt sich:

$$\text{sig} = \text{DSAsign}(\text{sk}, \text{SHA-1}(m)) \hspace{3cm} (1)$$

Für einen zweiten Zweck sei die zweite Mitteilung M bestimmt. Im Unterschied zu der für einen ersten Zweck eingesetzte Gleichung (1) berechnet man die Signatur für einen zweiten Zweck, beispielsweise für einen Nachladefreistempel, wie folgt:

$$\text{SIG} = \text{DSAsign}(\text{sk}, \text{SHA-1}(\text{SHA-1}(M))) \, , \hspace{3cm} (2)$$

Durch die zweimalige Anwendung von SHA-1 statt einmaliger Anwendung von SHA-1 kann verhindert werden, dass eine für einen zweiten Zweck berechnete Signatur für einen ersten Zweck als zutreffend ausgegeben wird. Eine Sicherheitsbetrachtung zeigt, dass auf diese Weise ein betrügerischer Benutzer als Nebenprodukt eine gewöhnliche Signatur auf die Mitteilung:

$$m' = \text{SHA-1}(M) \, . \hspace{3cm} (3)$$

erhält, was zum Wiederverwenden nicht hilfreich ist, weil der Datensatz dieser Mitteilung eine Länge von 160 bit = 20 byte hat, während zum "Wiederverwenden" einer Signatur eine Mitteilung einen Datensatz mit einer Länge von 49 Byte aufweisen müsste. Praktisch ist das Bekanntsein irgendeines 49 Byte langen Datensatzes auch noch nicht für einen Betrug ausreichend. Damit der Betrug klappt, müsste der Betrüger den Datensatz schon zum grossen Teil selbst auswählen können.

Die Figur 3 zeigt eine Kombination gleicher Cryptoalgorithmen 221 und 222 innerhalb der Logikschaltung 22. Es ist vorgesehen, dass sich letztere durch die Anwendung eines anderen Cryptoalgorithmus oder durch die doppelte Anwendung des gleichen Cryptoalgorithmus von der Logikschaltung 21 unterscheidet.

Es gibt eine Vielzahl an anderen möglichen Kombinationen zur Bildung eines Cryptoalgorithmuses. Die Figur 4 zeigt einfache Strukturen solcher Cryptoalgorithmen, wobei sich die Logikschaltung 22 durch die zusätzliche Anwendung eines weiteren Cryptoalgorithmus von der Logikschaltung 21 unterscheidet. Es ist bekannt, einen HMAC zu bilden, der dabei auf einer bekannten Hashfunktion SHA-1 basiert. Ein H-MAC benötigt ausser der Nachricht m noch einen Schlüssel k als Eingabe. Es ist vorgesehen, dass sich letztere durch die zusätzliche Anwendung eines anderen Cryptoalgorithmus oder durch die Anwendung unterschiedlicher Schlüssel bei einem gleichen Cryptoalgorithmus von der Logikschaltung 21 unterscheidet. Man könnte als Schlüssel zwei öffentlich bekannte Parameter vereinbaren, zum Beispiel 1010 für gewöhnliche Freistempel und 0101 fuer Nachladefreistempel. Die Parameter müssen öffentlich bekannt sein, weil letztere der Empfänger der Freistempel ja ebenfalls zum Prüfen braucht. Bei dieser Variante tritt das Problem nicht auf, das in der obigen Sicherheitsbetrachtung genannten Einsatzfall zum Nachladefreistempel geschildert wurde, denn ein Nachladefreistempel wird zwar mit demselben Signierschlüssel, aber mit einer anderen Kombination von Signier- und Hash-Algorithmen gebildet, als gewöhnliche Freistempel. Ausserdem kann man ein Nachladen durch eine online Transaktion direkt mit der Hersteller-Infrastruktur durchführen, in einer analogen Weise zum Guthabennachladen. Zur Authentikation der entsprechenden Nachricht des PSD's verwende man einen anderen Signierschlüssel als den für gewöhnliche Freistempel. Auf diese Weise können die entstehenden Signaturen niemals für Freistempelzwecke missbraucht werden.

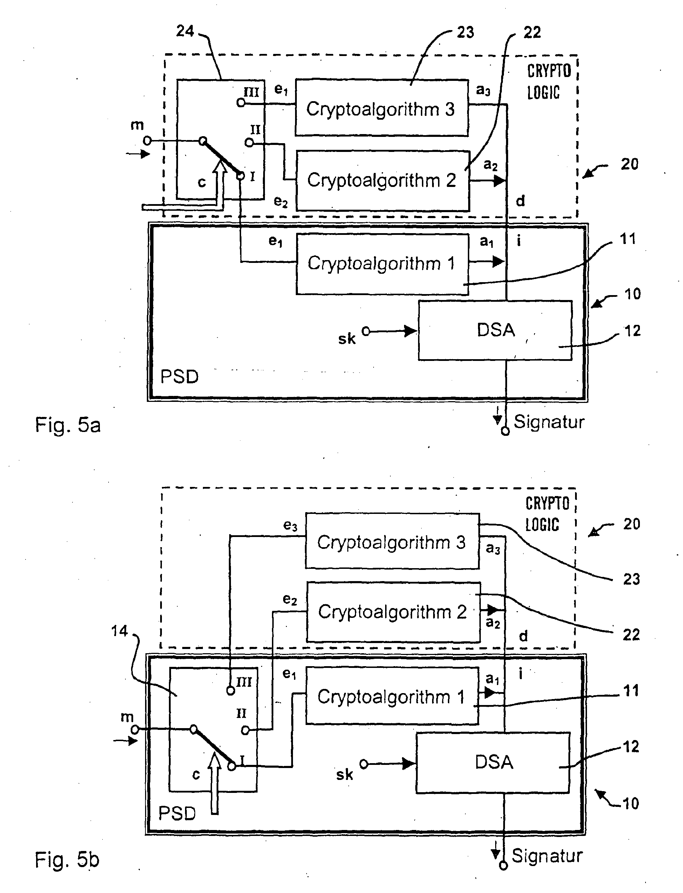

In der Figur 5a ist eine zweite Variante einer host-gesteuerten Umschaltung der Cryptoalgorithmen für eine Generierung einer Signatur mittels des postalischen Sicherheitsgerätes dargestellt. Dabei wird ein gewöhnliches postalisches Sicherheitsgerät PSD 10 mit einer Cryptologik 20 zusammengeschaltet und dabei dessen Funktionalität so erweitert, dass Signaturen entsprechend drei unterschiedlichen Zwecken gebildet werden können. Das gewöhnliche PSD 10 weist wieder zwei Logikschaltungen 11 und 12 auf, welche einen Software- oder Hardwaremodul beinhalten können. Die Cryptologik 20 verfügt einen host-gesteuerten eingangsseitigen Umschalter 24 für die Mitteilung m. Die Kontakte I, II und III des Umschalters 24 liegen jeweils am Eingang e1, e2, e3 einer der Logikschaltungen 11, 22, 23 an, wobei die Logikschaltungen 22 und 23 in der Cryptologik 20 angeordnet sind. Die Cryptologik 20 weist ausgangsseitig eine Zusammenschaltung der Ausgänge a2, a3 der Logikschaltung 22 und 23 und eine Verbindung des Ausgangs d zum Informationseingang i des PSD 10 auf. Der Ausgang a1 der Logikschaltung 11 ist ebenfalls mit dem Informationseingang i des PSD 10 verbunden. Der Informationseingang i des PSD 10 ist mit der zweiten Logikschaltung 12 eingangsseitig verbunden, die einen weiteren Algorithmus, beispielsweise einen DAS, auf das Ausgangssignal anwendet, um Daten für eine Signatur zu erzeugen.

Die Figur 5b zeigt eine PSD-gesteuerte Umschaltung der Cryptoalgorithmen für eine Generierung einer Signatur mittels des postalischen Sicherheitsgerätes nach einer ersten Variante. Das PSD hat eine interne Logikschaltung 11 für einen ersten Cryptoalgorithmus und eine zweite Logikschaltung 12, um die Daten für eine Signatur zu erzeugen. Die Cryptologik 20 weist Logikschaltungen für einen zweiten und dritten Cryptoalgorithmus 22 und 23 auf und benötigt keinen eingangsseitigen Umschalter. Dafür ist im PSD 10 ein PSD-gesteuerter eingangsseitiger Umschalter 14 für die Mitteilung m vorgesehen. Die Kontakte I, II und III des Umschalters 14 liegen jeweils am Eingang e1, e2, e3 einer der Logikschaltungen 11, 22, 23 an, wobei die Logikschaltungen 22 und 23 in der Cryptologik 20 angeordnet und zugehörige Eingänge e2 und e3 vorgesehen sind. Die Cryptologik 20 weist ausgangsseitig einen Anschluss d zur Verbindung der Ausgänge a2, a3 der Logikschaltung 22 und 23 mit dem Informationseingang i des PSD 10 auf.

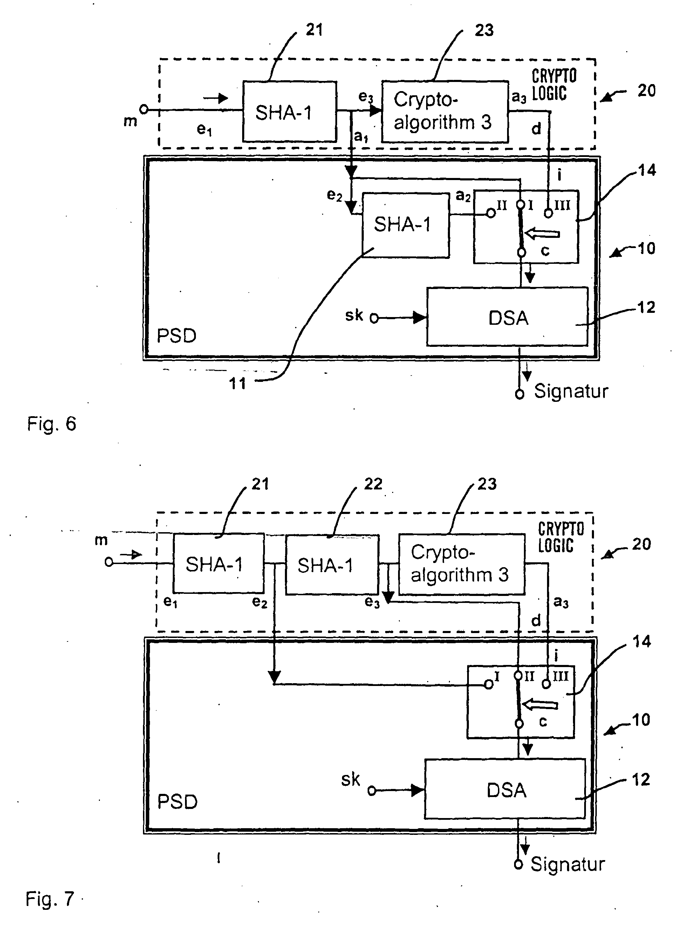

Die Figur 6 zeigt eine zweite Variante einer PSD-gesteuerte Umschaltung der Cryptoalgorithmen für eine Generierung einer Signatur mittels des postalischen Sicherheitsgerätes. Es ist kein eingangsseitiger Umschalter für die Mitteilung m vorgesehen, sondern letztere liegt am Eingang $e_1$ einer ersten Logikschaltung 21 für einen ersten Cryptoalgorithmus an. Deren Ausgang $a_1$ liegt am ersten Kontakt I eines Umschalter 14 innerhalb des PSD 10 an. Der Ausgang $a_1$ liegt außerdem am Eingang $e_2$ einer ersten Logikschaltung 11 im Inneren des PSD's 10. Deren Ausgang $a_2$ liegt am zweiten Kontakt II des Umschalters 14 innerhalb des PSD 10 an. Beide jeweils erste Logikschaltung 21 und 11 können den gleichen Cryptoalgorithmus aufweisen und werden von der Mitteilung nacheinander durchlaufen, wenn der Kontakt II des Umschalters 14 über einen Steuerdateneingang c durchdas PSD ausgewählt ist. Der Ausgang $a_1$ der ersten Logikschaltung 21 liegt außerdem am Eingang $e_3$ einer dritten Logikschaltung 23 der Cryptologik 20, d.h. extern vom PSD 10. Deren Ausgang $a_3$ liegt am dritten Kontakt III des Umschalters 14 innerhalb des PSD 10 an. Bei dieser zweiten Variante einer PSD-gesteuerten Umschaltung erfolgt die Umschaltung zwischen der ersten Logikschaltung 21 und der dritten Logikschaltung 23, die beide extern vom PSD 10 angeordnet sind, und der ersten Logikschaltung 11, die intern im PSD 10 angeordnet ist, unmittelbar vor dem Durchlaufen der zweiten Logikschaltung 12 die intern im PSD 10 angeordnet ist.

Die Figur 7 zeigt eine PSD-gesteuerte Umschaltung der Cryptoalgorithmen für eine Generierung einer Signatur mittels des postalischen Sicherheitsgerätes nach Variante 3. Eine erste Logikschaltung 21 für einen ersten Cryptoalgorithmus weist einen Eingang $e_1$ für eine Mitteilung m und einen Ausgang $a_1$ auf, der mit einem Eingang $e_2$ für eine zweite Logikschaltung 23 für einen zweiten Cryptoalgorithmus verbunden ist, wobei deren Ausgang $a_2$ mit einem Eingang $e_3$ für eine dritte Logikschaltung 23 für einen dritten Cryptoalgorithmus verbunden ist, wobei deren Ausgang $a_3$ am Informationseingang i des postalischen Sicherheitsgerätes 10 anliegt. Die Cryptologik 20 ist ausgangsseitig mit dem postalischen Sicherheitsgerätes 10 verbunden, wobei der Ausgang $a_1$ der ersten Logikschaltung 21 an einem ersten Kontakt I, wobei der Ausgang $a_2$ der zweiten Logikschaltung 22 an einem zweiten Kontakt II und wobei der Ausgang $a_3$ der weiteren Logikschaltung 23 an einem dritten Kontakt III eines PSD-gesteuerten Umschalters 14 innerhalb des postalischen Sicherheitsgerätes 10 anliegt. Der Umschalter 14 ist ausgangsseitig an eine zweite Logikschaltung 12 innerhalb des postalischen Sicherheitsgerätes 10 gekoppelt, die die Signatur erzeugt.

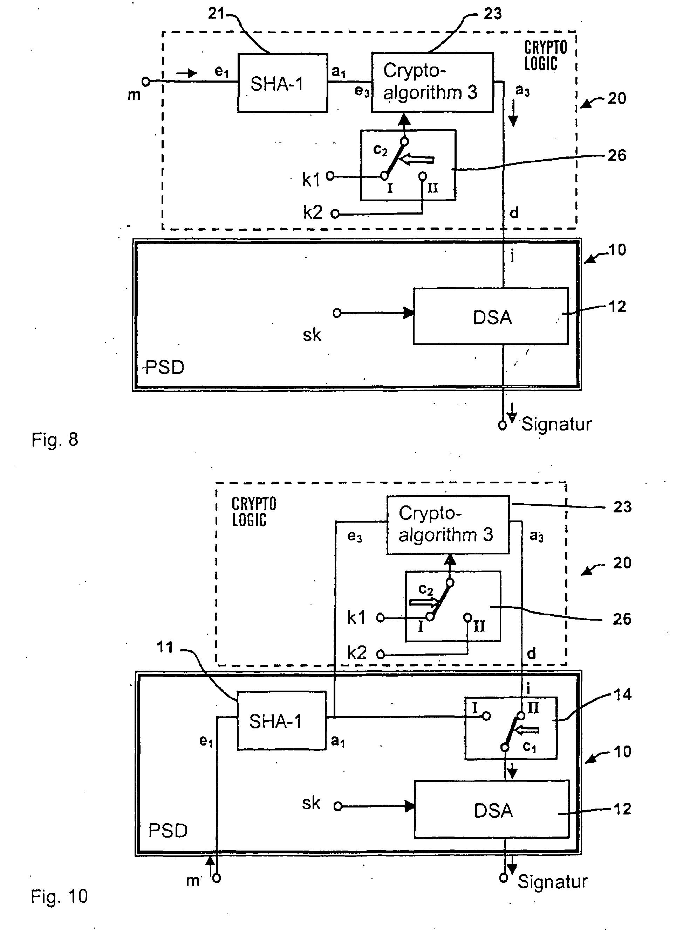

Die Figur 8 zeigt eine dritte Variante einer host-gesteuerten Umschaltung der Cryptoalgorithmen für eine Generierung einer Signatur mittels des postalischen Sicherheitsgerätes. Eine extern vom postalischen Sicherheitsgerät 10 angeordnete Cryptologik 20 ist mindestens mit ihrem Ausgang d mit einem Informationseingang i des postalischen Sicherheitsgerätes 10 verbunden. Das postalische Sicherheitsgerät 10 weist intern eine Logikschaltung 12 auf, die einen digitalen Signaturalgorithmus auf das vom Ausgang d gelieferte Ausgangssignal anwendet, um Daten für eine Signatur zu erzeugen. Die Cryptologik 20 weist eine Anzahl an Logikschaltungen 21, 23 und einen Umschalter 26 auf, der einen Steuerdateneingang $c_2$ hat, zur Steuerung durch einen - nicht gezeigten - Host. Der Umschalter 26 ist mit der weiteren Logikschaltung 23 verbunden und schaltet einen Schlüssel k1, k2 für den weiteren Cryptoalgorithmus um. Eine erste Logikschaltung 21 für einen ersten Cryptoalgorithmus weist einen Eingang $e_1$ für eine Mitteilung m und einen Ausgang $a_1$ auf, der mit einem Eingang $e_3$ für eine weitere Logikschaltung 23 für einen weiteren Cryptoalgorithmus verbunden ist, wobei deren Ausgang $a_3$ am Informationseingang i der zweiten Logikschaltung 12 anliegt, die die Signatur erzeugt.

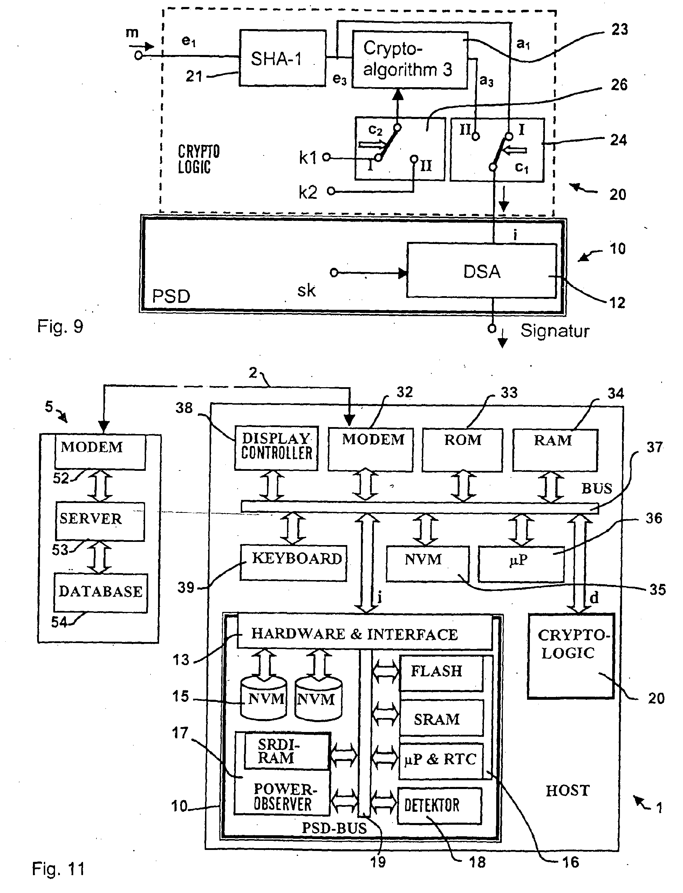

Die Figur 9 zeigt eine vierte Variante einer host-gesteuerten Umschaltung der Cryptoalgorithmen für eine Generierung einer Signatur mittels des postalischen Sicherheitsgerätes. Zusätzlich zur Schaltung der dritten Variante, die einen ersten Umschalter 26 ausweist, der einen Schlüssel k1, k2 für den weiteren Cryptoalgorithmus der weiteren Logikschaltung 23 umschaltet, ist ein zweiter Umschalter 24 in der host-gesteuerten Cryptologik 20 vorgesehen, wobei Kontakte I und II des Umschalters 24 mit den Ausgängen $a_1$ und $a_3$ der ersten und dritten Logikschaltung 21 und 23 verbunden sind. Der Umschalter 24 bildet ausgangsseitig den Ausgang d, der mit dem Informationseingang i des des postalischen Sicherheitsgerätes 10 verbunden ist. Es ist vorgesehen, dass die Umschalter 24 und 26 über einen Steuerdateneingang $c_1$, $c_2$ durch einen Host (nicht gezeigt) gesteuert werden.

Die Figur 10 zeigt eine Host- und PSD-gesteuerte Umschaltung der Cryptoalgorithmen für eine Generierung einer Signatur mittels des postalischen Sicherheitsgerätes. Das postalische Sicherheitsgerät 10 weist mindestens eine Logikschaltung 11 und die Cryptologik 20 weist mindestens eine Logikschaltung 23 auf. Die Cryptologik 20 hat einen ersten host-gesteuerten Umschalter 26, der einen Schlüssel k1, k2 für den weiteren Cryptoalgorithmus der weiteren Logikschaltung 23 umschaltet. Zur Umschaltung zwischen den Ausgängen $a_1$ bzw. $a_3$ der ersten bzw. dritten Logikschaltung 11 und 23 ist ein zweiter PSD-gesteuerter Umschalter 14 in dem postalischen Sicherheitsgerät 10 vorgesehen, wobei Kontakte I bzw. II des Umschalters 14 mit den Ausgängen $a_1$ bzw. $a_3$ der ersten bzw. dritten Logikschaltung 11 und 23 verbunden sind.

Die Figur 11 zeigt eine Blockschaltung eines Hostgerätes. Das postalische Sicherheitsgerät 10 und die Cryptologik 20 sind mittels Schnittstellen i, d über einen host-internen BUS 37 betriebsmäßig verbunden. Eine Hardware und Interfaceschaltung 13 des postalischen Sicherheitsgerätes 10 für die Schnittstelle i kann beispielsweise mit einer anwendungsspezifischen Schaltung (ASIC) realisiert werden. Leztere ist zur Durchführung der vorgenannten kryptographischen Funktionen mit einer Datenverarbeitungseinheit 16 und mit nichtflüchtigen Speichern 15 zur Durchführung von weiteren Funktionen verbunden. Die Datenverarbeitungseinheit 16 weist einen Mikroprozessor ($\mu$P) mit Echtzeituhr (RTC), FLASH-Speicher und Arbeitsspeicher (SRAM) auf. Das Sicherheitsgerät 10 verfügt über interne Überwachungseinheiten 17 und 19 und einen internen BUS 19. Das Hostgerät 1 verfügt ebenfalls über einen nichtflüchtigen Speicher 35, Mikroprozessor 36, Festwertspeicher 33, Arbeitsspeicher 34 sowie über ein Modem 32, Tastatur 39 und Displaycontroller 38 mit Anzeigeeinheit (nicht gezeigt). Das Hostgerät 1 kann über eine Kommunikationsverbindung 2 mit einer entfernten Datenzentrale 5 verbunden werden. Die Datenzentrale 5 verfügt beispielsweise über ein Modem 52, einen Server 53 und eine Datenbank 54. Das Hostgerät 1 ist - in nicht gezeigter Weise — über eine Kommunikationsverbindung oder Schnittstelle mit einem weiteren Gerät, beispielsweise einer Druckvorrichtung, verbindbar.

Die Erfindung ist nicht auf die vorliegenden bzw. solche Ausführungsformen beschränkt, bei denen mindestens zwei verschiedene durch eine Authorität zugelassene Hash-Funktionen bei demselben Signieralgorithmus benutzt werden. Alternativ kann dieselbe Hashfunktion bei zwei verschiedenen zugelas-senen Signieralgorithmen benutzt werden. Die Cryptologik 20 ist dann ebenfalls mit dem PSD 10 verbunden. Die verschiedenen zugelassenen Signieralgorithmen und deren Umschaltung werden softwaremäßig vorge-nommen. Die Cryptologik 20 enthält nur eine Logikschaltung 21 für einen Cryptoalgorithmus, zum Beispiel eine bekannte Hash-Funktion.

Es ist eine Vielzahl von alternativen Kombinationen im Rahmen der Ansprüche denkbar, die unterschiedlich ausgeführt sind. So können offensichtlich weitere andere Ausführungen der Erfindung entwickelt bzw. eingesetzt werden.

**Patentansprüche**

1. Verfahren zur unterschiedlichen Erzeugung kryptographischer Sicherungen von Mitteilungen in einem Hostgerät, wobei mit Ausnahme solcher digitaler Signaturen, die in Zertifikaten für öffentliche Schlüssel verwendet werden, zur kryptographischen Sicherung einer Mitteilung für einen ersten Zweck eine erste Signatur und zur kryptographischen Sicherung einer Mitteilung für einen zweiten Zweck eine zweite Signatur eingesetzt wird, **gekennzeichnet dadurch, dass** sich die Signaturen in der Art ihrer Erzeugung unterscheiden, wobei gespeicherte Programme eine beliebige Kombination von Signier-Algorithmen und Hash-Algorithmen für einen Mitteilungstyp ermöglichen.

**2.** Verfahren nach Anspruch 1, **gekennzeichnet dadurch, dass** die kryptographischen Algorithmen zur Erzeugung von Signaturen programmgemäß im Festwertspeicher eines postalischen Sicherheitsgerätes (10), implementiert und dass die Signaturen programmgesteuert erzeugt werden, wobei mindestens ein kryptographischer Algorithmus hardwaremäßig und außerhalb des postalischen Sicherheitsgerätes (10) ausgeführt wird.

**3.** Verfahren nach Anspruch 1, **gekennzeichnet dadurch, dass** die kryptographischen Algorithmen zur Erzeugung von Signaturen programmgesteuert in separaten Logiken realisiert und Signaturen erzeugt werden.

**4.** Verfahren nach Anspruch 1, **gekennzeichnet dadurch, dass** eine Logik allein oder in Verbindung mit Programmen im Festwertspeicher des postalischen Sicherheitsgerätes (10) und zusätzlich mit Programmen im Festwertspeicher des Hostgerates mindestens einen bestimmten Algorithmus aus der Vielzahl der kryptographischen Algorithmen ausführt, wobei die Ausführung in Abhängigkeit vom einem jeweils eingestellten Mitteilungstyp gesteuert wird.

**5.** Anordnung zur unterschiedlichen Erzeugung kryptographischer Sicherungen von Mitteilungen in einem Hostgerät, wobei mit Ausnahme solcher digitaler Signaturen, die in Zertifikaten für öffentliche Schlüssel verwendet werden, zur kryptographischen Sicherung einer Mitteilung für einen ersten Zweck eine erste Signatur und zur kryptographischen Sicherung einer Mitteilung für einen zweiten Zweck eine zweite Signatur eingesetzt wird, **gekennzeichnet dadurch, dass** eine Cryptologik (20) extern von mindestens einem postalischen Sicherheitsgerät (10) angeordnet ist und mindestens mit ihrem Ausgang (d) mit einem Informationseingang (i) des postalischen Sicherheitsgerätes (10) verbunden ist, dass die Cryptologik (20) host-gesteuert ist und eine Anzahl an Logikschaltungen (21, 22, 23) enthält, die eine beliebige Kombination von Signier-Algorithmen und Hash-Algorithmen für einen Mitteilungstyp ermöglichen und dass das postalische Sicherheitsgerät (10) eine Logikschaltung (12) aufweist, die einen digitalen Signaturalgorithmus auf das vom Ausgang (d) gelieferte Ausgangssignal anwendet, um Daten für eine Signatur zu erzeugen.

**6.** Anordnung, nach Anspruch 5, **gekennzeichnet dadurch, dass** die host-gesteuerte Cryptologik (20) einen Steuerdateneingang ($c$, $c_1$, $c_2$) aufweist.

**7.** Anordnung, nach den Ansprüchen 5 und 6, **gekennzeichnet dadurch, dass** die host-gesteuerte Cryptologik (20) einen Umschalter (24, 26) aufweist, der vom Host (1) gesteuert wird.

**8.** Anordnung, nach den Ansprüchen 5 bis 7, **gekennzeichnet dadurch, dass** eine erste Logikschaltung (21) für einen ersten Cryptoalgorithmus und eine zweite Logikschaitung (22) für einen zweiten Cryptoalgorithmus eingangsseitig verbunden sind und ausgangsseitig jeweils auf Kontakte (I und II) des Umschalters (24) führen, wobei letzterer ausgangsseitig am Eingang der zweiten Logikschaltung (12) anliegt, die die Signatur erzeugt.

**9.** Anordnung, nach den Ansprüchen 5 bis 7, **gekennzeichnet dadurch, dass** das postalischen Sicherheitsgerät (10) eine erste Logikschaltung (11) für einen ersten Cryptoalgorithmus und eine zweite Logikschaltung (12) aufweist, die Daten für eine Signatur erzeugt, dass die host-gesteuerte Cryptologik (20) eine zweite und dritte Logikschaltung (22) und (23) und einen Umschalter (24) aufweist, wobei die erste Logikschaltung (11) des postalischen Sicherheitsgerätes (10) und die zweite und dritte Logikschaltung (22) und (23) ausgangsseitig mit dem Informationseingang (i) des postalischen Sicherheitsgerätes (10) verbunden sind, wobei der Informationseingang (i) mit der zweiten Logikschaltung (12) eingangsseitig verbunden ist, sowie dass der Umschalter (24) einen Eingang für eine Mitteilung (m) und Kontakte (I, II und III) aufweist, die jeweils am Eingang ($e_1$, $e_2$, $e_3$) der Logikschaltungen (11, 22, 23) anliegen.

**10.** Anordnung, nach den Ansprüchen 5 bis 7, **gekennzeichnet dadurch, dass** eine erste Logikschaltung (21) für einen ersten Cryptoalgorithmus einen Eingang ($e_1$) für eine Mitteilung (m) und einen Ausgang ($a_1$) aufweist, der mit einem Eingang ($e_3$) für eine weitere Logikschaltung (23) für einen weiteren Cryptoalgorithmus verbunden ist, wobei deren Ausgang ($a_3$) am Informationseingang (i) einer zweiten Logikschaltung (12) des postalischen Sicherheitsgerätes (10) anliegt, wobei die zweiten Logikschaltung (12) die Signatur erzeugt.

**11.** Anordnung, nach Anspruch 10, **gekennzeichnet dadurch, dass** mit der weiteren Logikschaltung (23) für den weiteren Cryptoalgorithmus ein Umschalter (26) verbunden ist, der einen Schlüssel (k1, k2) umschaltet.

**12.** Anordnung, nach den Ansprüchen 10 bis 11, **gekennzeichnet dadurch, dass** ein erster und ein zweiter Umschalter (24, 26) in der host-gesteuerten Cryptologik (20) vorgesehen sind, wobei die Umschalter (24 und 26) über einen Steuerdateneingang ($c_1$, $c_2$) durch einen Host steuerbar sind, wobei Kontakte (I und II) des Umschalters (24) mit den Ausgängen ($a_1$) und ($a_3$) der ersten und dritten Logikschaltung (21) und (23) sowie dass der zweite Umschalter (24) ausgangsseitig den Ausgang (d) bildet, der mit dem Informationseingang (i) des postalischen Sicherheitsgerätes (10) verbunden ist.

**13.** Anordnung, nach den Ansprüchen 5 und 6, **gekennzeichnet dadurch, dass** das postalische Sicherheitsgerät (10) und die Cryptologik (20) jeweils mindestens eine Logikschaltung (11) und (23) aufweisen und dass die Cryptologik (20) einen ersten host-gesteuerten Umschalter (26) aufweist, der einen Schlüssel (k1, k2) für den weiteren Cryptoalgorithmus der weiteren Logikschaltung (23) umschaltet, dass ein zweiter PSDgesteuerter Umschalter (14) in dem postalischen Sicherheitsgerät (10) vorgesehen ist, wobei Kontakte (I bzw. II) des zweiten Umschalters (14) mit den Ausgängen ($a_1$ bzw. $a_3$) der ersten bzw. dritten Logikschaltung (11) und (23) verbunden sind.

**14.** Anordnung, nach Anspruch 5, **gekennzeichnet dadurch, dass** das postalische Sicherheitsgerät (10) oder die Cryptologik (20) mindestens eine Logikschaltung (11) und (22, 23) aufweisen sowie dass die Cryptologik (20) ausgangsseitig mindestens mit dem Ausgang (d) direkt oder indirekt auf den Eingang (i) der zweiten Logikschaltung (12) geschaltet ist, die im Inneren des postalischen Sicherheitsgerätes (10) angeordnet ist.

**15.** Anordnung, nach Anspruch 5, **gekennzeichnet dadurch, dass** das postalische Sicherheitsgerät (10) und die Cryptologik (20) jeweils mindestens eine Logikschaltung (11) und (22, 23) aufweisen sowie dass das postalische Sicherheitsgerät (10) einen PSD-gesteuerten Umschalter (14) mit einem Steuerdateneingang (c) aufweist, wobei die erste Logikschaltung (11) des postalischen Sicherheitsgerätes (10) und die zweite und dritte Logikschaltung (22) und (23) der Cryptologik (20) ausgangsseitig mit dem Informationseingang (i) des postalischen Sicherheitsgerätes (10) verbunden sind, sowie dass der Umschalter (14) einen Eingang für eine Mitteilung (m) und Kontakte (I, II und III) aufweist, die jeweils am Eingang ($e_1$, $e_2$, $e_3$) der Logikschaltungen (11, 22, 23) anliegen.

**16.** Anordnung, nach Anspruch 5, **gekennzeichnet dadurch, dass** eine erste Logikschaltung (21) für einen ersten Cryptoalgorithmus einen Eingang ($e_1$) für eine Mitteilung (m) und einen Ausgang ($a_1$) aufweist, der mit einem Eingang ($e_3$) für eine weitere Logikschaltung (23) für einen weiteren Cryptoalgorithmus verbunden ist, wobei deren Ausgang ($a_3$) am Informationseingang (i) des postalischen Sicherheitsgerätes (10) anliegt, dass die Cryptologik (20) ausgangsseitig mit dem postalischen Sicherheitsgerätes (10) verbunden ist, wobei der Ausgang ($a_1$) der ersten Logikschaltung (21) an einem ersten Kontakt (I) und wobei der Ausgang ($a_3$) der weiteren Logikschaltung (23) an einem dritten Kontakt (III) eines PSD-gesteuerten Umschalters (14) innerhalb des postalischen Sicherheitsgerätes (10) anliegt und wobei an einem zweiten Kontakt (II) des Umschalters (14) der Ausgang ($a_2$) einer ersten Logikschaltung (11) innerhalb des postalischen Sicherheitsgerätes (10) anliegt, welche eingangsseitig am Ausgang ($a_1$) der ersten Logikschaltung (21) der Cryptologik (20) angeschlossen ist und dass der Umschalter (14) ausgangsseitig an eine zweite Logikschaltung (12) innerhalb des postalischen Sicherheitsgerätes (10) gekoppelt ist, die die Signatur erzeugt.

**17.** Anordnung, nach Anspruch 5, **gekennzeichnet dadurch, dass** eine erste Logikschaltung (21) für einen ersten Cryptoalgorithmus einen Eingang ($e_1$) für eine Mitteilung (m) und einen Ausgang ($a_1$) aufweist, der mit einem Eingang ($e_2$) für eine zweite Logikschaltung (23) für einen zweiten Cryptoalgorithmus verbunden ist, wobei deren Ausgang ($a_2$) mit einem Eingang ($e_3$) für eine dritte Logikschaltung (23) für einen dritten Cryptoalgorithmus verbunden ist, wobei deren Ausgang ($a_3$) am Informationseingang (i) des postalischen Sicherheitsgerätes (10) anliegt, dass die Cryptologik (20) ausgangsseitig mit dem postalischen Sicherheitsgerätes (10) verbunden ist, wobei der Ausgang ($a_1$) der ersten Logikschaltung (21) an einem ersten Kontakt (I), wobei der Ausgang ($a_2$) der zweiten Logikschaltung (22) an einem zweiten Kontakt (II) und wobei der Ausgang ($a_3$) der weiteren Logikschaltung (23) an einem dritten Kontakt (III) eines PSD-gesteuerten Umschalters (14) innerhalb des postalischen Sicherheitsgerätes (10) anliegt und dass der Umschalter (14) ausgangsseitig an eine zweite Logikschaltung (12) innerhalb des postalischen Sicherheitsgerätes (10) gekoppelt ist, die die Signatur erzeugt.

## Claims

**1.** A method for a different generation of cryptographic secure procedures for messages in a host device wherein, except for such digital signatures that are used in certificates for public keys, there is used a first signature for cryptographically securing a message for a first purpose and a second signature for cryptographically securing a message for a second purpose, **characterized in that** the signatures differ by the way they are generated, stored programs allowing for any combination of signing algorithms and hash algorithms for a type of message.

**2.** A method according to Claim 1, **characterized in that** the cryptographic algorithms for the generation of signatures are implemented in a program-related manner in the read-only memory of a postal security device (10) and that signatures are generated in a program-controlled manner, wherein at least one cryptographic algorithm is carried out by hardware and outside the postal security device (10).

3. A method according to Claim 1, **characterized in that** the cryptographic algorithms for the generation of signatures are realized program-controlled in separate logics and signatures are generated.

4. A method according to Claim 1, **characterized in that** a logic executes either alone or in combination with programs in the read-only memory of the postal security device (1) and, in addition, with programs in the read-only memory of the host device at least one specific algorithm from the plurality of cryptographic algorithms, the execution being controlled depending on a type of message respectively set.

5. An arrangement for a different generation of cryptographic secure procedures for messages in a host device wherein, except for such digital signatures that are used in certificates for public keys, there is used a first signature for cryptographically securing a message for a first purpose and a second signature for cryptographically securing a message for a second purpose, **characterized in that** a crypto-logic unit (20) is arranged externally of at least one postal security device (10) and is connected at least with its output (d) to the information input (i) of the postal security device (10), that the crypto-logic unit (20) is host-controlled and contains a number of logic circuits (21, 22, 23) that allow for any combination of signing algorithms and hash algorithms for a type of message and that the postal security device (10) has a logic circuit (12) that applies a digital signature algorithm to the output signal supplied by output (d) in order to generate data for a signature.

6. An arrangement according to Claim 5, **characterized in that** the host-controlled crypto-logic unit (20) has a control data input $(c, c_1, c_2)$.

7. An arrangement according to Claims 5 and 6, **characterized in that** the host-controlled crypto-logic unit (20) has a change-over switch (24, 26) that is controlled by the host (1).

8. An arrangement according to Claims 5 to 7, **characterized in that** a first logic circuit (21) for a first crypto-algorithm and a second logic circuit (22) for a second crypto-algorithm are connected on their input side and that their outputs lead to contacts (I and II) of the change-over switch (24), respectively, the output of the latter being connected to the input of the second logic circuit (12) that generates the signature.

9. An arrangement according to Claims 5 to 7, **characterized in that** the postal security device (10) has a first logic circuit (11) for a first crypto-algorithm and a second logic circuit (12) that generates data for a signature, that the host-controlled crypto-logic unit (20) has a second and a third logic circuit (22) and (23) and a change-over switch (24), wherein the first logic circuit (11) of the postal security device (10) and the second and third logic circuits (22) and (23) are connected on their output side with the information input (i) of the postal security device (10) and wherein the information input (i) is connected with the input of the second logic circuit (12), and that the change-over switch (24) has an input for a message (m) and contacts (I, II and III) that are connected to the inputs $(e_1, e_2, e_3)$ of the logic circuits (11, 22, 23), respectively.

10. An arrangement according to Claims 5 to 7, **characterized in that** a first logic circuit (21) for a first crypto-algorithm has an input $(e_1)$ for a message (m) and an output $(a_1)$ that is connected with an input $(e_3)$ of a further logic circuit (23) for a further crypto-algorithm the output $(a_3)$ of which is connected to the information input (i) of a second logic circuit (12) of the postal security device (10), wherein said second logic circuit (12) generates the signature.

11. An arrangement according to Claim 10, **characterized in that** the further logic circuit (23) for the further crypto-algorithm is connected to a change-over switch (26) that switches over a key (k1, k2).

12. An arrangement according to Claims 10 to 11, **characterized in that** a first and a second change-over switch (24, 26) are provided in the host-controlled crypto-logic unit (20) wherein said change-over switches (24 and 26) can be controlled by a host via a control-data input $(c_1, c_2)$, the contacts (I and II) of the change-over switch (24) being connected with the outputs $(a_1)$ and $(a_3)$ of the first and third logic circuits (21) and (23), respectively, and that the second change-over switch (24) forms, on its output side, the output (d) that is connected to the information input (i) of the postal security device (10).

13. An arrangement according to Claims 5 and 6, **characterized in that** the postal security device (10) and the crypto-logic unit (20) have at least one logic circuit (11) and (23) each and that the crypto-logic unit (20) has a first host-controlled change-over switch (26) that switches over a key (k1, k2) for the further crypto-algorithm of the further logic circuit (23), that a second PSD-controlled change-over switch (14) is provided in the postal security device (10), wherein the contacts (I and II, respectively) of the second change-over switch (14) are connected with the outputs ($a_1$ and $a_3$) of the first or third logic circuit (11) and (23), respectively.

14. An arrangement according to Claim 5, **characterized in that** the postal security device (10) or the crypto-logic unit (20) has at least one logic circuit (11) and (22, 23) as well as that, on its output side, the crypto-logic unit (20) is directly or indirectly connected at least with its output (d) to the input (i) of the second logic circuit (12) that is arranged inside the postal security device (10).

15. An arrangement according to Claim 5, **characterized in that** the postal security device (10) and the crypto-logic unit (20) have at least one logic circuit (11) and (22, 23) each, that the postal security device (10) has a PSD-controlled change-over switch (14) with a control data input (c), wherein the first logic circuit (11) of the postal security device (10) and the second and third logic circuits (22) and (23) of the crypto-logic unit (20) are connected, on their output side, with the information input (i) of the postal security device (10), and that the change-over switch (14) has an input for a message (m) and contacts (I, II and III) that are connected to the input ($e_1$, $e_2$, $e_3$) of the logic circuits (11, 22, 23), respectively.

16. An arrangement according to Claim 5, **characterized in that** a first logic circuit (21) for a first crypto-algorithm has an input ($e_1$) for a message (m) and an output ($a_1$) that is connected with an input ($e_3$) for a further logic circuit (23) for a further crypto-algorithm, its output ($a_3$) being connected to the information input (i) of the postal security device (10), that the output side of the crypto-logic unit (20) is connected with the postal security device (10), wherein the output ($a_1$) of the first logic circuit (21) is connected to a first contact (I) and wherein the output ($a_3$) of the further logic circuit (23) is connected to a third contact (III) of a PSD-controlled change-over switch (14) within the postal security device (10) and wherein the second contact (II) of the change-over switch (14) is connected with the output ($a_2$) of a first logic circuit (11) within the postal security device (10), the input of which is connected to the output ($a_1$) of the first logic circuit (21) of the crypto-logic unit (20) and that the output of the change-over switch (14) is coupled to a second logic circuit (12) within the postal security device (10) that generates the signature.

17. An arrangement according to Claim 5, **characterized in that** a first logic circuit (21) for a first crypto-algorithm has an input ($e_1$) for a message (m) and an output ($a_1$) that is connected with an input ($e_2$) for a second logic circuit (23) for a second crypto-algorithm, its output ($a_2$) being connected with an input ($e_3$) for a third logic circuit (23) for a third crypto-algorithm, its output ($a_3$) being connected to the information input (i) of the postal security device (10), that the output side of the crypto-logic unit (20) is connected with the postal security device (10), wherein the output ($a_1$) of the first logic circuit (21) is connected to a first contact (I), wherein the output ($a_2$) of the second logic circuit (22) is connected to a second contact (II) and wherein the output ($a_3$) of the further logic circuit (23) is connected to a third contact (III) of a PSD-controlled change-over switch (14) within the postal security device (10) and that the output of the change-over switch (14) is coupled to a second logic circuit (12) within the postal security device (10) that generates the signature.

**Revendications**

1. Procédé de génération de sécurités cryptographiques différentes pour des messages dans un dispositif hôte, et dont soit utilisée pour la sécurité cryptographique d'un message - à l'exception des signatures numériques qui sont utilisées dans des certificats pour des clés publiques -une première signature pour un premier but et pour la sécurité cryptographique d'un message une deuxième signature pour un deuxième but, **caractérisé en ce que** les signatures se différencient dans le mode de leur génération, et dont des programmes enregistrés permettent une combinaison quelconque d'algorithmes de signature et d'algorithmes de hachage pour un type de message.

2. Procédé selon la revendication 1, **caractérisé en ce, que** les algorithmes cryptographiques pour la génération de signatures soient implémentés comme le prévoit le programme dans la mémoire permanente d'un appareil postal de sécurité (10) et que les signatures soient générées par la commande du programme, avec l'exécution d'au moins un algorithme cryptographique à l'aide d'un matériel situé hors de l'appareil postal de sécurité (10).

3. Procédé selon la revendication 1, **caractérisé en ce, que** les algorithmes cryptographiques pour la génération de signatures soient réalisés sous la commande par programme dans des logiques séparées et que des signatures soient générées.

**4.** Procédé selon la revendication 1, **caractérisé en ce, qu'**une logique seule ou en relation avec des programmes enregistrés dans la mémoire permanente de l'appareil postal de sécurité (10) exécute en supplément, avec des programmes de la mémoire permanente du dispositif hôte, au moins un algorithme spécifique parmi la pluralité d'algorithmes cryptographiques, cette exécution étant commandée en dépendance d'un type de message respectif paramétré.

**5.** Dispositif pour la génération de sécurités cryptographiques différentes pour des messages dans un dispositif hôte, et dont soit utilisée - à l'exception des signatures numériques qui sont utilisées dans des certificats pour des clés publiques - pour la sécurité cryptographique d'un message une première signature pour un premier but et pour la sécurité cryptographique d'un message une deuxième signature pour un deuxième but, **caractérisé en ce qu'**une logique cryptographique (20) soit agencée à l'extérieur d'au moins un appareil postal de sécurité (10) et que ladite logique cryptographique soit au minimum reliée avec sa sortie (d) à une entrée d'information (i) de l'appareil postal de sécurité (10), que la logique cryptographique (20) soit commandée par un dispositif hôte et qu'elle comporte un nombre de circuits logiques (21, 22, 23), qui permettent une combinaison quelconque d'algorithmes de signature et d'algorithmes de hachage pour un type de message et que l'appareil postal de sécurité (10) comporte un circuit logique (12), qui utilise un algorithme de signature numérique sur le signal de sortie fourni par la sortie (d), pour générer des données pour une signature.

**6.** Dispositif selon la revendication 5, **caractérisé en ce, que** la logique de cryptographie (20) commandée par un dispositif hôte comporte une entrée de données de commande (c, $c_1$, $c_2$).

**7.** Dispositif selon les revendications 5 et 6, **caractérisé en ce, que** la logique cryptographique (20), commandée par un dispositif hôte, comporte un commutateur (24, 26) commandé par le dispositif hôte (1).

**8.** Dispositif, selon les revendications 5 à 7, **caractérisé en ce, qu'**un premier circuit logique (21) pour un premier algorithme cryptographique et un deuxième circuit logique (22) pour un deuxième algorithme cryptographique soient reliés du côté des entrées et que du côté des sorties ils soient connectés respectivement aux contacts (I et II) du commutateur (24), ce dernier étant connecté côté sortie à l'entrée du deuxième circuit logique (12), qui génère la signature.

**9.** Dispositif, selon les revendications 5 à 7, **caractérisé en ce, que** l'appareil postal de sécurité (10) comporte un premier circuit logique (11) pour un premier algorithme cryptographique et un deuxième circuit logique (12), qui génère des données pour une signature, que la logique cryptographique (20) commandée par un dispositif hôte comporte un deuxième et un troisième circuit logique (22) et (23) et un commutateur (24), et dont le premier circuit logique (11) de l'appareil postal de sécurité (10) et le deuxième et troisième circuit logique (22) et (23) soient reliés par leurs sorties avec l'entrée d'information (i) de l'appareil postal de sécurité (10), l'entrée d'information (i) étant reliée côté entrée avec le deuxième circuit logique (12), et que le commutateur (24) comporte une entrée pour un message (m) et des contacts (I, II et III), qui sont connectés respectivement à l'entrée ($e_1$, $e_2$, $e_3$) des circuits logiques (11, 22, 23).

**10.** Dispositif, selon les revendications 5 à 7, **caractérisé en ce, qu'**un premier circuit logique (21) pour un premier algorithme cryptographique comporte une entrée ($e_1$) pour un message (m) et une sortie ($a_1$) reliée avec une entrée ($e_3$) pour un autre circuit logique (23) pour un autre algorithme cryptographique, et dont la sortie ($a_3$) de celui-ci soit connectée à l'entrée d'information (i) d'un deuxième circuit logique (12) de l'appareil postal de sécurité (10), le deuxième circuit logique (12) générant la signature.

**11.** Dispositif, selon la revendication 10, **caractérisé en ce, qu'**un commutateur (26) qui commute une clé (k1, k2) soit relié avec un autre circuit logique (23) pour un autre algorithme cryptographique.

**12.** Dispositif, selon les revendications 10 à 11, **caractérisé en ce, qu'**un premier et un deuxième commutateur (24, 26) soient prévus dans la logique cryptographique (20), lesdits commutateurs (24 et 26) pouvant être commandés par un hôte par l'intermédiaire d'une entrée de données de commande ($c_1$, $c_2$), et dont les contacts (I et II) du commutateur (24) soient reliés aux sorties ($a_1$) et ($a_3$) du premier et du troisième circuit logique (21) et (23), et que le deuxième commutateur (24) forme côté sortie la sortie (d), qui est reliée à l'entrée d'information (i) de l'appareil postal de sécurité (10).

**13.** Dispositif, selon les revendications 5 et 6, **caractérisé en ce, que** l'appareil postal de sécurité (10) et la logique cryptographique (20) comportent respectivement au moins un circuit logique (11) et (23) et que la logique cryptographique (20) comporte un premier commutateur (26) commandé par un dispositif hôte, ledit commutateur étant destiné à commuter une clé (k1, k2) pour l'autre algorithme cryptographique de l'autre circuit logique (23), qu'un deuxième commutateur (14) commandé par PSD soit prévu dans l'appareil postal de sécurité (10), les contacts (I ou encore II) du deuxième commutateur (14) étant connectés aux sorties ($a_1$ ou encore $a_3$) du premier ou encore troisième circuit logique (11) et (23).

**14.** Dispositif, selon la revendication 5, **caractérisé en ce, que** l'appareil postal de sécurité (10) ou la logique cryptographique (20) comporte au minimum un circuit logique (11) et (22, 23) et que coté sortie, la logique cryptographique (20) soit connectée directement ou indirectement au minimum avec la sortie (d) à l'entrée (i) du deuxième circuit logique (12), qui est agencé à l'intérieur de l'appareil postal de sécurité (10).

**15.** Dispositif, selon la revendication 5, **caractérisé en ce, que** l'appareil postal de sécurité (10) et la logique cryptographique (20) comportent respectivement au minimum un circuit logique (11) et (22, 23) et que l'appareil postal de sécurité (10) comporte un commutateur (14) commandé par PSD et comportant une entrée de données de commande (c), et que le premier circuit logique (11) de l'appareil postal de sécurité (10) et le deuxième et troisième circuit logique (22) et (23) de la logique cryptographique (20) soient connectés côté sortie avec l'entrée d'information (i) de l'appareil postal de sécurité (10), et que le commutateur (14) comporte une entrée pour un message (m) et des contacts (I, II et III), qui sont respectivement connectés à l'entrée ($e_1$, $e_2$, $e_3$) des circuits logiques (11, 22, 23).

**16.** Dispositif, selon la revendication 5, **caractérisé en ce, qu'**un premier circuit logique (21) pour un premier algorithme cryptographique comporte une entrée ($e_1$) pour un message (m) et une sortie ($a_1$) connectée avec une entrée ($e_3$) pour un autre circuit logique (23) pour un autre algorithme cryptographique, et dont la sortie ($a_3$) de celui-ci soit connectée à l'entrée d'information (i) de l'appareil postal de sécurité (10), que la logique cryptographique (20) soit reliée côté sortie avec l'appareil postal de sécurité (10), et dont la sortie ($a_1$) du premier circuit logique (21) soit connectée à un premier contact (I) et la sortie ($a_3$) de l'autre circuit logique (23) à un troisième contact (III) d'un commutateur (14), commandé par PSD, au sein de l'appareil postal de sécurité (10) et dont la sortie ($a_2$) d'un premier circuit logique (11) au sein de l'appareil postal de sécurité (10) soit connectée à un deuxième contact (II) du commutateur (14), ladite sortie étant connectée côté entrée à la sortie ($a_1$) du premier circuit logique (21) de la logique de cryptographie (20) et que le commutateur (14) soit couplé, côté sortie, à un deuxième circuit logique (12) au sein de l'appareil postal de sécurité (10), ledit circuit logique générant la signature.

**17.** Dispositif, selon la revendication 5, **caractérisé en ce, qu'**un premier circuit logique (21) pour un premier algorithme cryptographique comporte une entrée ($e_1$) pour un message (m) et une sortie ($a_1$) connectée avec une entrée ($e_2$) pour un deuxième circuit logique (23) pour un deuxième algorithme cryptographique, et dont la sortie ($a_2$) de celui-ci soit connectée à une entrée ($e_3$) pour un troisième circuit logique (23) pour un troisième algorithme cryptographique, et dont la sortie ($a_3$) de celui-ci soit connectée à l'entrée d'information (i) de l'appareil postal de sécurité (10), que la logique cryptographique (20) soit connectée côté sortie à l'appareil postal de sécurité (10), la sortie ($a_1$) du premier circuit logique (21) étant connectée à un premier contact (I), la sortie ($a_2$) du deuxième circuit logique (22) étant connectée à un deuxième contact (II) et la sortie ($a_3$) de l'autre circuit logique (23) étant connectée à un troisième contact (III) d'un commutateur (14), commandé par PSD, au sein de l'appareil postal de sécurité (10) et que le commutateur (14) soit couplé côté sortie à un deuxième circuit logique (12) au sein de l'appareil postal de sécurité (10), ledit circuit logique générant la signature.

prior art

Fig.1

Fig. 2

Fig. 3

Fig. 4

Fig. 5a

Fig. 5b

Fig. 6

Fig. 7

Fig. 8

Fig. 10

m →

$e_1$

SHA-1

21

$e_3$

Crypto-
algorithm 3

$a_1$

23

$a_3$

26

$c_2$

II  I

24

k1

I

II

$c_1$

CRYPTO
LOGIC

k2

20

PSD

sk

DSA

i

10

12

Signatur

Fig. 9

2

5

38

32

33

34

MODEM

DISPLAY
CONTROLLER

MODEM

ROM

RAM

37

52

BUS

SERVER

36

53

KEYBOARD

NVM

μP

35

DATABASE

39

54

HARDWARE & INTERFACE

CRYPTO-
LOGIC

13

FLASH

20

15

NVM  NVM

SRAM

17

SRDI-
RAM

μP & RTC

HOST

POWER-
OBSERVER

DETEKTOR

1

10

PSD-BUS

19

18

16

Fig. 11

**IN DER BESCHREIBUNG AUFGEFÜHRTE DOKUMENTE**

**In der Beschreibung aufgeführte Patentdokumente**

- US 5953426 A
- US 6041704 A
- EP 789333 A2
- DE 20112350 U1
- US 2002108042 A
- US 6058384 A
- US 5231668 A